# EUROPEAN PATENT SPECIFICATION

(11) **EP 0 595 842 B1**
(45) Date of publication and mention of the grant of the patent: **04.06.1997**
(21) Application number: 92914189.3
(22) Date of filing: 18.06.1992
(51) Int. Cl.: A01N 47/36

(54) **HERBICIDAL COMPOSITION FOR PADDY FIELDS**
HERBIZIDE ZUSAMMENSETZUNG FÜR BEWÄSSERUNGSREISFELDER
COMPOSITION HERBICIDE POUR RIZIERES

(30) Priority: 21.06.1991 JP 175715/91; 19.07.1991 JP 203728/91
(43) Date of publication of application: 11.05.1994
(73) Proprietor: E.I. DU PONT DE NEMOURS AND COMPANY, Wilmington Delaware 19898 (US)
(72) Inventor: ITO, Kenji, Tsukuba-shi, Ibaraki 305 (JP); SHIRAKURA, Shinichi, Ushiku-shi, Ibraki 300-12 (JP); TSURUBUCHI, Yuji, Tsukuba-shi, Ibaraki 305 (JP)
(74) Representative: Woodman, Derek
(86) International application number: US9204964
(87) International publication number: WO9300011

(56) References cited:
- WO-A-89/01289
- FR-A- 2 609 370
- GB-A- 2 193 634
- CHEMICAL ABSTRACTS, vol. 116, no. 5 Columbus, Ohio, US; abstract no. 36239n, YUYAMA TAKESHI 'herbicidal compositions comprising pyrazolesulfonamide derivative and dymrone'

## Description

### BACKGROUND OF THE INVENTION

This invention relates to a herbicidal composition for use in paddy fields which comprise a mixture of two sulfonylurea herbicidal compounds and the mixture of said two sulfonylurea herbicides with various known herbicides.

New compounds effective for controlling the growth of undesired vegetation are in constant demand. In the most common situation, such compounds are sought to selectively control the growth of weeds in useful crops such as cotton, rice, corn, wheat and soybeans, to name a few. Unchecked weed growth in such crops can cause significant losses, reducing profit to the farmer and increasing costs to the consumer. In other situations, herbicides are desired which will control all plant growth. Examples of areas in which complete control of all vegetation is desired are areas around railroad tracks, storage tanks and industrial storage areas. There are many products commercially available for these purposes, but the search continues for products which are more effective, less costly and environmentally safe.

The "sulfonylurea" herbicides are an extremely potent class of herbicides discovered within the last few years which generally consist of a sulfonylurea bridge, -SO₂NHCONH-, linking two aromatic or heteroaromatic rings.

U.S. Patent 4,420,325 discloses a sulfonylurea compound of the formula

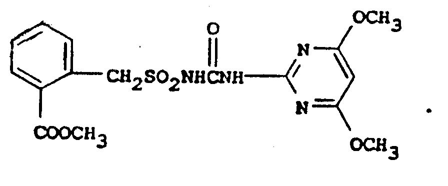

U.S. Patent 4,746,353 discloses a sulfonylurea compound of the formula

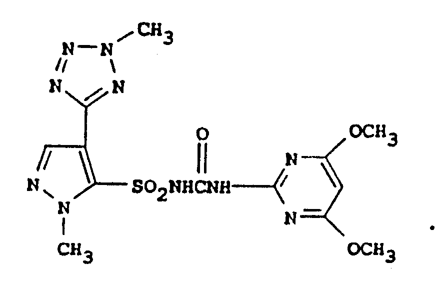

U.S. Patent 4,383,113 discloses a sulfonylurea compound of the formula

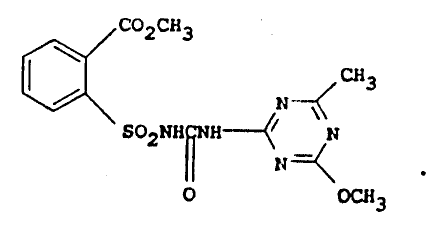

Herbicidal mixtures for use in rice crops are disclosed in FR-A-2,609,370; JP-A-3,106,804; and WO89/01289.

### SUMMARY OF THE INVENTION

This invention relates to a herbicidal composition for use in paddy fields. The herbicidal compositions of the invention comprise a mixture of (a) a compound expressed by formula (I) below: 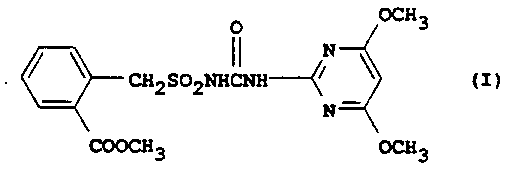 and (b) a compound expressed by formula (II) below: 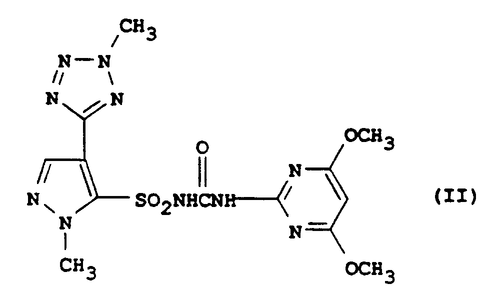 and one or more of the following: a surfactant, solid or liquid diluent.

There have been a large number of herbicides reduced to practice for use in paddy fields. However, it is virtually impossible to control all species of paddy field weeds with a single herbicidal component. Normal practice has been to systematically use several kinds of herbicidal components in combination or to mix several herbicidal components differing in the applicable weed species that they control or the application time, with the view to effectively control a broad spectrum of weed species including predominating perennial broad-leafed and cyperaceous weeds, besides annual broad-leafed and cyperaceous weeds.

2-[(4,6-Dimethoxypyrimidine-2-yl)aminocarbonylaminosulfonylmethyl]benzoic acid methyl ester (general name: bensulfuron methyl) is a compound developed by E. I. du Pont de Nemours and Company, U.S.A., as a herbicidal compound which exhibits good effect on a broad spectrum of weed species with low application rates (U.S. Patent 4,420,325). This compound (bensulfuron methyl) is characterized by control of the broader spectrum of applicable weeds compared to hitherto known herbicides. That is, it exhibits excellent herbicidal activity on a wide variety of weeds both annual and perennial, and its effect is durable over a prolonged period after one application. While it exhibits excellent herbicidal activity also on such perennial weeds as water chestnut (Eleocharis kuroguwai, Ohwi,), water nutgrass (Cyperus serotinus Rottb.), arrowhead (Sagittaria trifolia L.), etc., which are regarded as weeds that are difficult to control, its residual effect on those perennial weeds is somewhat unsatisfactory.

The present invention solves the above problem with the compound of formula (I) (bensulfuron methyl), with the use concurrently with the compound, pyrazole tetrazolesulfonylurea, expressed by formula (II) below: 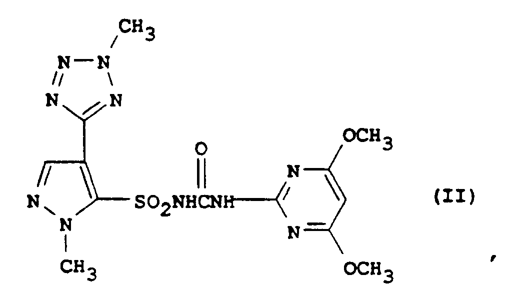 by controlling a very broad spectrum of grass species covering both annual and perennial weeds at a very low application rate and by only one application.

The herbicidal composition of the invention shows little phytotoxicity to paddy field rice plants, and exhibits remarkable herbicidal effect on annual and perennial paddy field weeds at a very small application dosage and, furthermore, by a single application.

The compound of formula (I) (bensulfuron methyl), which is one of the effective components of the herbicidal composition of the present invention, exhibits as previously stated excellent herbicidal activity on a broad spectrum of weed species covering annual weeds to perennial weeds, but has a defect that its residual activity on such perennial weeds such as water chestnut and water nutgrass is unsatisfactory.

Whereas, the compound of formula (II) shows only insufficient herbicidal effect on annual broad-leafed weeds such as false pimpernel (Lindernia pyxidaria L.) and spike-flowered rotala (Rotala indica koehne var. ulginosa Koehne), but it exhibits outstanding herbicidal effect on annual cyperaceous weeds, perennial cyperaceous weeds (e.g., water chestnut, water nutgrass) and also on perennial broad-leafed weeds such as arrowhead, Japanese ribbon wapatoo (Sagittaria pygmaea miq.), etc., at a very small application rate and with excellent residual effect (activity duration) (U.S. Patent 4,746,353).

It is now found, by the concurrent use of the compound of formula (I) and that of formula (II) according to the present invention, that not only the characteristic properties of the two compounds are simply added up, but also the two interact synergistically, to enable effective control of a broad spectrum of weed species ranging from annual weeds to perennial weeds, at a very small application rate and, furthermore, by a single application, with no danger of causing phytotoxicity on paddy field rice plants even under poor cultivation conditions (for example, shallow plantation, paddy field of sandy soil, exceedingly high temperature after transplantation of rice seedlings, etc.).

Such effects exhibited by the present invention are recognized over a broad range of blend ratios of the compounds of formulae (I) and (II). Generally it is convenient, however, to use the compound of formula (II), per 100 parts of the compound of formula (I), in an amount ranging from 12 to 100 parts, perferably 15-50 parts, inter alia, 17-30 parts, the parts being by weight.

Again, if necessary the herbicidal composition of the present invention can further contain at least one compound (barnyard grass-controlling agent) selected from those expressed by formulae (III), (IV), (V), and (VII): 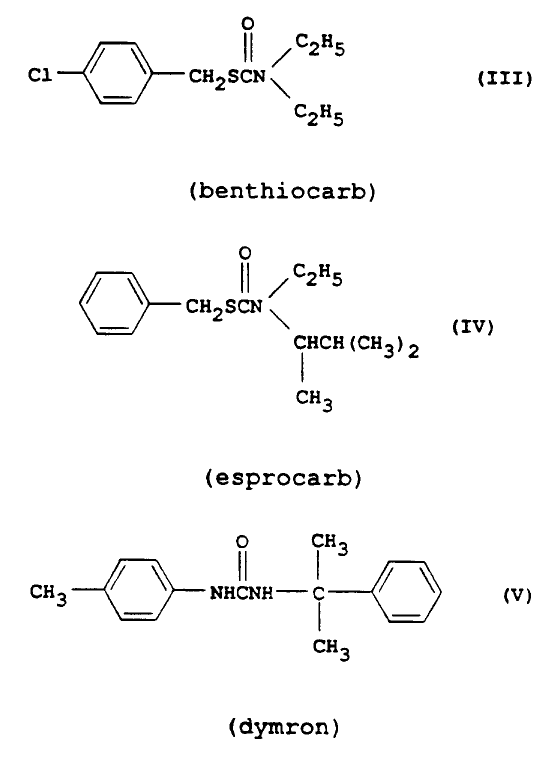 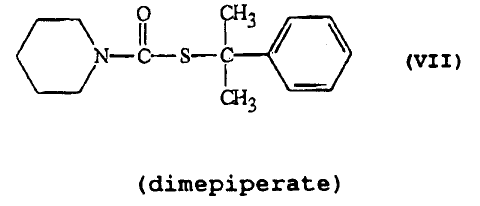 the inclusion of which reduces the risk of phytotoxicity of paddy field rice plants by the application of the herbicidal composition. This herbicidal composition substantially reduces phytotoxicity on paddy field rice which therefore drastically improves the rice safety.

When such a barnyard grass-controlling agent is used concurrently, its blend ratio is variable depending on which compound is used, and a uniform specification is impossible. Generally, however, per 100 parts of the sum of the compounds of formulae (I) and (II), the compound of formula (III) (benthiocarb) is used in an amount of 700-12500 parts, preferably 1000-5600 parts, most preferably, 2000-3800 parts; the compound of formula (IV) (esprocarb) is used in an amount of 1100-9000 parts, preferably 1500-5000 parts, most preferably, 2000-3800 parts; the compound of formula (V) is used in an amount of 350-9000 parts, preferably 500-4200 parts, most preferably, 530-1500 parts; and the compound of formula (VII) (dimepiperate) is used in an amount of 1100-9000 parts, preferably 1500-5000 parts, most preferably 2000-3800 parts; the parts being by weight. Furthermore, when a compound of formula (III) or (V) is used in an amount of 2500 parts by weight or more, herbicidal effect on barnyard grass also can be manifested.

The compounds of formulae (III), (IV), (V), and (VII) can be used either single or in combination of two, three or four.

Compound II of the formula (II), a compound expressed 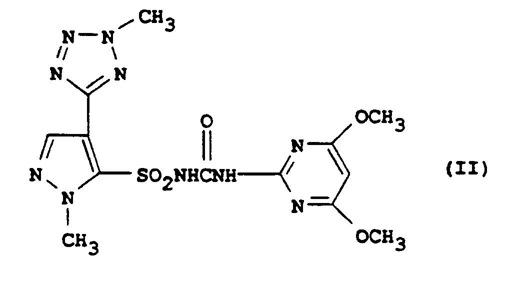 can also be used in a herbicidal composition for paddy field rice with a compound of formula (VI) below:

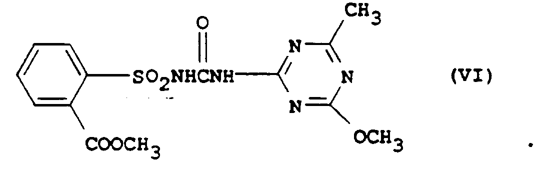

U.S. Patent 4,746,353 discloses, as a herbicide for paddy field, which has a broad weed-killing spectrum including annual and perennial cyperaceous weeds and perennial broad-leafed weeds, and furthermore exhibits excellent herbicidal effect at low application rate, a pyrazole tetrazolesulfonylurea compound of formula (II) below:

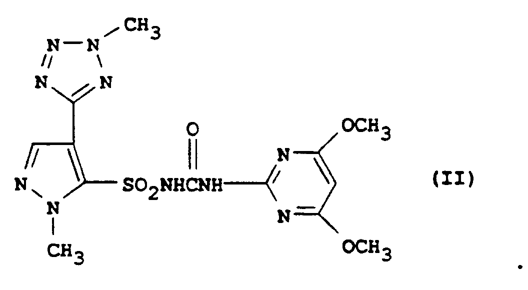

When the compound of formula (II) is used concurrently with the compound of formula (VI) below: 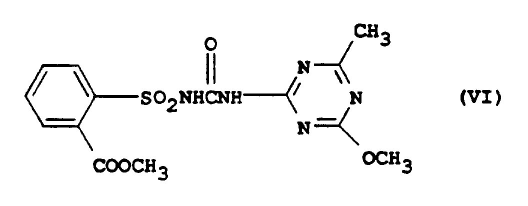 vis., methyl 2-[[[[(4-methoxy-6-methyl-1,3,5-triazine-2-yl)amino]carbonyl]amino]sulfonyl]benzoate (general name: metsulfuron methyl), not only annual and perennial cyperaceous weeds and perennial broad-leafed weeds, but other major paddy field weeds of versatile and broad spectrum of weed species including annual broad-leafed weeds can be effectively controlled.

Whereas, the compound of formula (VI) (metsulfuronmethyl) possesses excellent herbicidal effect against many varieties of annual broad-leafed weeds such as duck tongue weed (Monochoria vaginalis Presl var. plantaginea Solms-Laub.), false pimpernel, spike-flowered rotala, etc., it exhibits insufficient herbicidal effects on perennial weeds and, furthermore, is phytotoxic to paddy field rice plants.

It is now found that the concurrent use of the compounds of formulae (II) and (VI) can effectively control a broad spectrum of both annual and perennial weeds at very minor application dosages, without causing phytotoxicity to the rice plants in paddy field.

Such effects of the herbicidal composition of the present invention can be recognized over a broad range of blend ratio of the compounds of formulae (II) and (VI). Generally, the compound of formula (VI) is conveniently used within the range of, per 100 parts of the compound of formula (II), 5-100 parts, perferably 8-70 parts, inter alia, 25-33 parts, the parts being by weight.

Thus, the compositions of the present invention comprise a combination of compounds selected from (a) compound (I) with compound (II), (b) compound (I) with compound (II) and one or more of compound (III), (IV), and (V), (c) compound (II) with compound (VI) and (d) compound (II) with compound (VI) and one or more of compound (III), (IV), (V), and (VII). The compositions of the present invention are normally blended with a surfactant or a solid or liquid diluent and other adjuvant(s) if necessary, to be formulated into normal preparation forms employed for herbicides, for example, dust, powder, fine granule, pellet, wettable powder, emulsion, solution, water-soluble concentrate, oil suspension, etc.

Solid diluents which can be suitably used for formulating the herbicidal compositions of the present invention include: clays typical of which are kaolinite, montmorillonite and attapulgite; inorganic substances such as talc, mica, pyrophyllite, pumice, vermiculite, gypsum, calcium carbonate, dolomite, diatomaceous earth, magnesium lime, phosphorus lime, zeolite, silicon anhydride and synthetic calcium silicate; vegetable organic substances such as soybean powder, tobacco powder, walnut powder, wheat flour, wood flour, starch and crystalline cellulose; synthesized and natural high molecular weight substances such as coumarone resin, petroleum resin, alkyd resin, polyvinyl chloride, polyalkylene glycol, ketone resin, ester gum, copal gum and gum dammar; waxes such as carnauba wax and beeswax; and urea.

Suitable liquid diluents include paraffinic or naphthenic hydrocarbons such as kerosene, mineral oil, spindle oil and white oil; aromatic hydrocarbons such as benzene, toluene, xylene, ethylbenzene, cumeme, methylnaphthalene; chlorinated hydrocarbons such as carbon tetrachloride, chloroform, trichloroethylene, monochlorobenzene, o-chlorotoluene, etc.; ethers such as dioxane, tetrahydrofuran; ketones such as acetone, methyl ethyl ketone, diisobutyl ketone, cyclohexanone, acetophenone and isophorone; esters such as ethyl acetate, amyl acetate, ethylene glycol acetate, diethylene glycol acetate, dibutyl maleate and diethyl succinate; alcohols such as methanol, n-hexanol, ethylene glycol, diethylene glycol, cyclohexanol and benzyl alcohol; ether alcohols such as ethylene glycol ethyl ether, ethylene glycol phenyl ether, diethylene glycol ethyl ether and diethylene glycol butyl ether; polar solvents such as dimethylformamide and dimethylsulfoxide; and water.

Surfactants can also be blended in the compositions of the present invention for such purposes as emulsifying, dispersing, wetting, extending, combining, degradation regulating, stabilizing the effective ingredients, improving fluidability, rust-proofing, etc., which may be non-ionic, anionic, cationic or amphoteric, but normally non-ionic and/or anionic surfactants are conveniently used. Suitable non-ionic surfactants include adducts of ethylene oxide to higher alcohols such as lauryl alcohol, stearyl alcohol and oleyl alcohol; adducts of ethylene oxide to alkyl phenols such as isooctyl phenol and nonyl phenol; adducts of ethylene oxide to alkyl naphthol such as butyl naphthol and octyl naphthol; adducts of ethylene oxide to higher fatty acids such as palmitic acid, stearic acid and oleic acid; polymerization adducts of ethylene oxide to mono- or dialkylphosphoric acids such as stearyl phosphoric acid and dilauryl phosphoric acid; polymerization adducts of ethylene oxide to amines such as dodecyl amine and stearyl amine; higher fatty acid esters of polyhydric alcohols such as sorbitol, and ethylene oxide adducts thereof; and polymerization adducts of ethylene oxide and propylene oxide. Examples of suitable anionic surfactants include, for example, alkyl sulfates such as sodium lauryl sulfate, amine salt of oleyl alcohol sulfate; alkyl sulfonates such as sodium dioctylsulfosuccinate and sodium 2-ethylhexenesulfonate; and aryl sulfonates such as sodium isopropylnaphthalene sulfonate, sodium methylene-bis-naphthalene sulfonate, sodium lignine sulfonate and sodium dodecylbenzene sulfonate.

Furthermore, with the view to improve the properties of the preparations and to increase their biological effects, polymeric substances such as casein, gelatin, albumin, glue, sodium alginate, carboxymethyl cellulose, methyl cellulose, hydroxyethyl cellulose, polyvinyl alcohol, etc., and other adjuvants may be blended in the herbicidal compositions of the present invention.

Above carriers and various adjuvants are optionally used either singly or in combination depending on the individual purpose, in consideration of the form of the preparation and situation of its application.

The dust preparation may contain, for example, normally 1-7.5 parts in total of the effective ingredients, the balance being a solid carrier. The wettable powder may contain, for example, normally 20-90 parts of the effective ingredients, the balance being a solid carrier and a dispersing and wetting agent. If necessary, the powder may further contain a protective colloid, thixotropic agent, defoaming agent, etc. The parts are by weight.

Pellets, for example, can contain normally 0.01 to 7.5 parts of effective ingredients, for example, the balance being mostly a solid carrier. In this case the effective compounds may be uniformly mixed with the solid carrier or uniformly deposited or adsorbed on the surfaces of the solid carrier. The pellets may have the diameters ranging from about 0.2 to 1.5 mm.

The emulsion may contain the effective compounds normally in an amount of 5 to 30 parts and from about 5 to 20 parts of an emulsifying agent, the balance being a liquid carrier. The emulsion may further contain a rust-proofing agent if necessary.

The compositions of the present invention may be blended further with other agriculturally active chemicals, such as a barnyard grass-controlling agent, plant growth-regulating agent, nematocide, fertilizer and an insecticide, etc.

The herbicidal compositions of the present invention are applicable to paddy field soil or flooding water surface, before transplantation there into of rice plant seedlings. They may also be applied to the flooding water surface in the paddy field surface after transplantation of the seedlings. The time of their application is subject to no particular limitation, as it may be either pre- or post-emergence of weeds. Normally it is convenient to apply them within the period of 0 to 30 days, preferably 3 to 15 days, after the transplantation of rice plant seedlings.

The application dosages of the herbicidal compositions of this invention are not strictly limited, but can be varied over a wide range depending on the application time, specific manner and ratio of combination of the effective ingredients, the nature and condition of individual paddy field soil, natural conditions of the area, rice plant species, etc. In general terms, the composition is applied, as the sum of the compounds of formulae (I) and (II), at a rate within the range of from about 15-85 g/ha, preferably from about 20-60 g/ha, inter alia, from about 34-42 g/ha. The composition of formulae (II) and (VI) is applied, as the sum of the effective ingredients, at a rate within the range of from about 3.5-18 g/ha, preferably from about 6.5-15 g/ha, inter alia, from about 7.5-12 g/ha.

The dosages of the composition when the compounds of formulae (III), (IV), (V) and/or (VII) is to be concurrently used are as follows: as the total sum of the effective ingredients, normally from about 650 to about 3000 g/ha, preferably from about 1840 to about 2440 g/ha, inter alia, from about 2139-2142 g/ha, when the compound of formula (III) is used; it is from about 1050 to about 2500 g/ha, preferably from about 1840 to about 2280 g/ha, inter alia, from 2139-2142 g/ha, when the compound of formula (IV) is used; in the case of the compound of formula (V), it is from about 350 to about 2150 g/ha, preferably from about 400 to about 1100 g/ha, inter alia, from about 489 to about 492 g/ha; and, in the case of the compound of formula (VII), it is from about 2000 to about 4000 g/ha, preferably from about 2500 to about 3500 g/ha, inter alia, from about 3008 to 3022 g/ha.

Hereinafter the invention is still more specifically explained, referring to the following working and test examples.

Specific blend examples of the herbicidal compositions of the present invention are shown below, in which "parts" are by weight unless otherwise specified.

### EXAMPLE 1

| Wettable powder | |
|---|---|
| Compound of formula (I) | 1 part |
| Compound of formula (II) | 6 parts |
| Sodium ligninesulfonate | 3 parts |
| Kaolinite | 89 parts |
| Sodium dioctylsulfosuccinate | 1 part |

Above components are mixed well, pulverized with a hammer mill to the particles of the diameters not more than 5µ, and mixed once again to provide a wettable powder.

### EXAMPLE 2

| Pellets | |
|---|---|
| Compound of formula (I) | 0.02 part |
| Compound of formula (II) | 0.12 part |
| Neokol | 0.5 part |
| Bentonite | 35 parts |
| Talc | 64.36 parts |

Above components were mixed well, pulverized with a hammer mill, kneaded with about 20% thereof of water, extruded through an extrusion-type pelletizer having a diameter of about 1 mm, and cut into about 3-mm long pellets.

### EXAMPLE 3

| Pellets | |
|---|---|
| Compound of formula (I) | 0.02 part |
| Compound of formula (II) | 0.12 part |
| Compound of formula (III), (IV) or (V) | 1.5 part |
| Neokol | 0.5 part |
| Bentonite | 35 parts |
| Talc | 62.86 parts |

The above components were processed as in above Example 2 to provide pellets.

### TEST EXAMPLE 1

### Herbicidal Effect Under Flooded Condition

Plastic pots of each 12 cm in inner diameter were filled with paddy field soil (alluvial light soil), flooded, fertilized and paddled. The depth of the flooding water was maintained at about 1 cm. Seeds of barnyard grass, umbrella plant (Cyperus difformis L.), duck tongue weed (Monochoria vaginalis Persl var. plantaginea Solms-Laub.), spike-flowered rotala and Bulrush (Scirpus juncoides Roxb.) were sown in the pots. Separately, tubers of Japanese ribbon wapatoo and water nutgrass whose germination had been promoted in advance were transplanted. After the seeding and transplantation, the pots were allowed to stand in a greenhouse in which the temperature was maintained at 25-30°C. At 1.5-leaf stage and 2.5-leaf stage of the barnyard grass, the depth of the flooding water was increased to 3 cm, and each the prescribed amount of the chemicals were dissolved in acetone and directly added to the pots dropwise with a pippet. The herbicidal effect on the various weeds was examined four weeks after the chemical treatment, following the evaluation standard specified in the following. The results are shown in Table 1.

| Evaluation System of Herbicidal Effect | |
|---|---|
| (Observation) | Amount of residual weeds compared to that in the untreated lot |
| 0: | 90-100% |
| 1: | 80-90% |
| 2: | 70-80% |
| 3: | 60-70% |
| 4: | 50-60% |
| 5: | 40-50% |
| 6: | 30-40% |
| 7: | 20-30% |
| 8: | 10-20% |
| 8.5: | 5-10% |
| 9: | 2.5-5% |
| 9.5: | 2-2.5% |
| 10: | 0% |

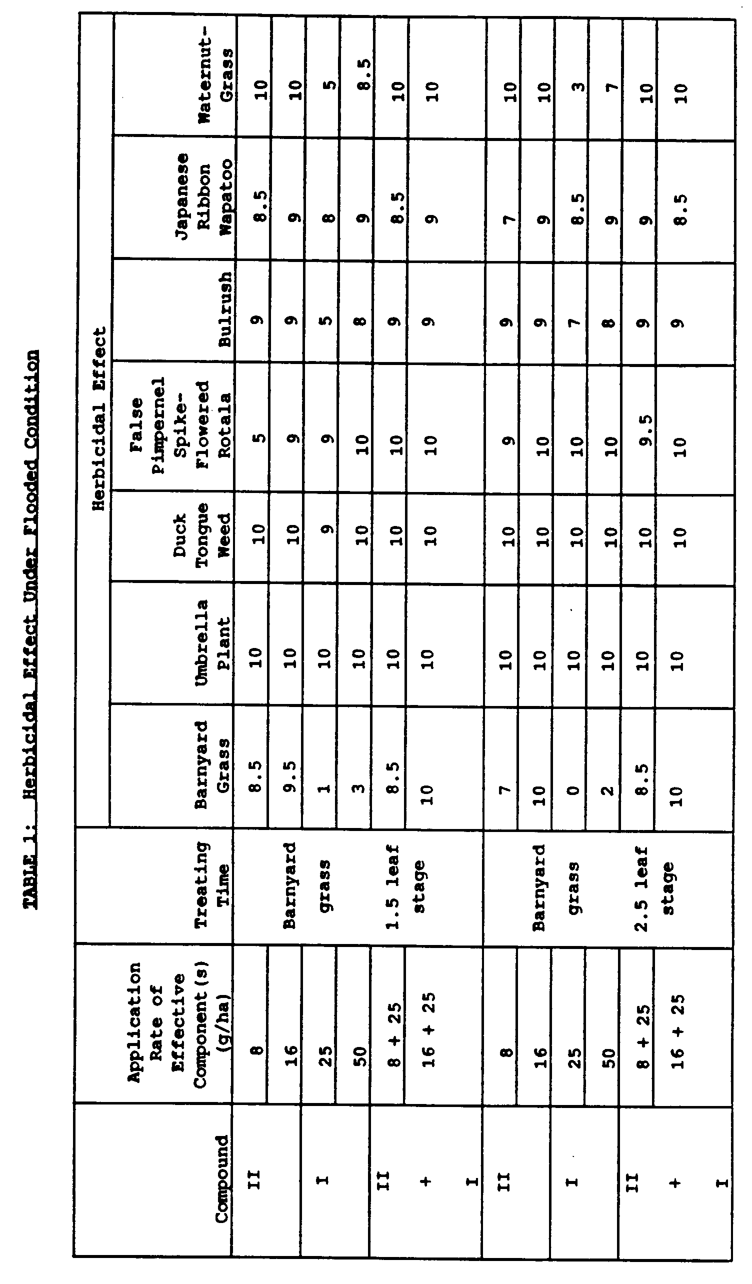

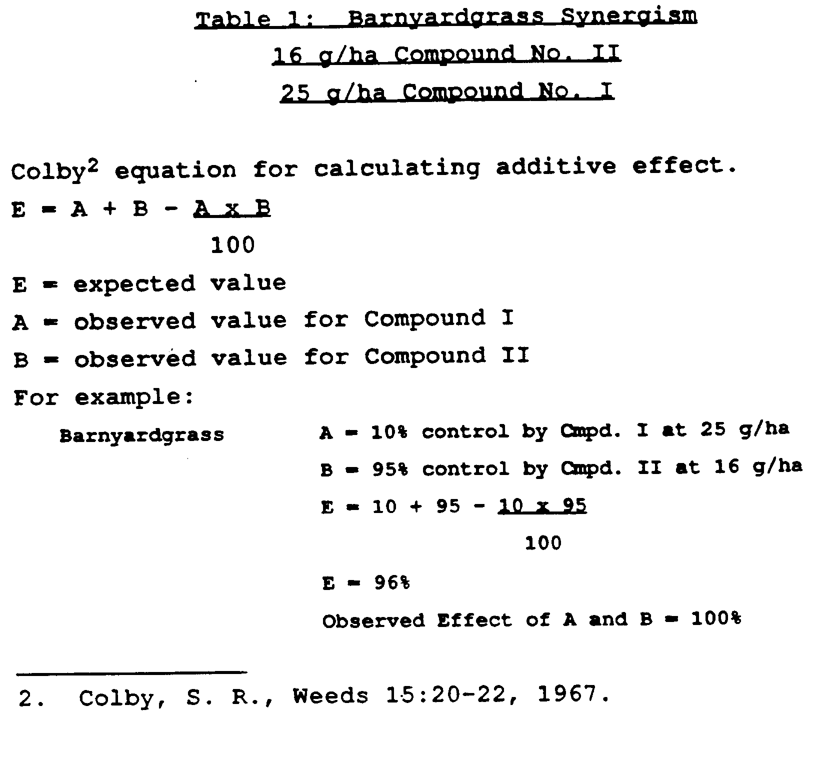

### TEST EXAMPLE 2

### Effect on Transplanted Rice Plants Under Flooded Condition

1/5000 Are Wagner pots were filled with paddy field soil (alluvial light soil), flooded, fertilized and paddled. The depth of the flooded water was about 1 cm. Separately greenhouse-cultivated rice plant seedlings (specie: Nihonbare, about 2.1 leaf stage) were planted in the pots, four single-stem stock per pot. On the fifth and tenth days after the transplantation, the depth of the flooding water was increased to 3 cm, and the prescribed amount of the chemical(s) as dissolved in acetone was directly added to the water surface, dropwisely with a pippet. On the 21st day after the chemical treatment, the effect of the chemical(s) on the rice plant growth was observed, and the stem heights were measured. Also the stems were cut at the ground level, dried at 80°C for 48 hours, and weighed to determine the dry weight of the terrestrial part. The results are shown in Table 2. The evaluation standard of the effect of the chemical(s) on rice plant growth in the visual observation was as follows:

| Evaluation Standard of Effect on Paddy Field Rice Plant | |
|---|---|
| (Observation) | |
| 0: | Equivalent growth to that in the untreated lot |
| 1: | Slight inhibition recognizable in grass height, leaf color, etc., which recovered quickly |
| 2: | A light degree of inhibition observed in grass height, leaf color, etc., which recovered quickly |
| 2.5: | A light degree of inhibition observed in grass height, tillering, leaf color, etc., recovery is slightly retarded; practically acceptable limit |
| 3: | Appreciable inhibition observed in grass height, tillering, etc., recovery slightly retarded |
| 4: | Appreciable inhibition observed in grass height, tillering and leaf color, etc., recovery retarded |
| 5: | Appreciable inhibition observed in grass height, tillering, leaf color, etc., growth suspended |
| 6: | Grass height and tillering inhibited to 50% or less of those in the untreated lot; growth suspended |
| 7: | Grass height and tillering inhibited; growth after the chemical treatment notably low |
| 8: | Nearly no growth after the chemical treatment; withering or blighting part observable in leaf blades |
| 10: | Perfect withering |

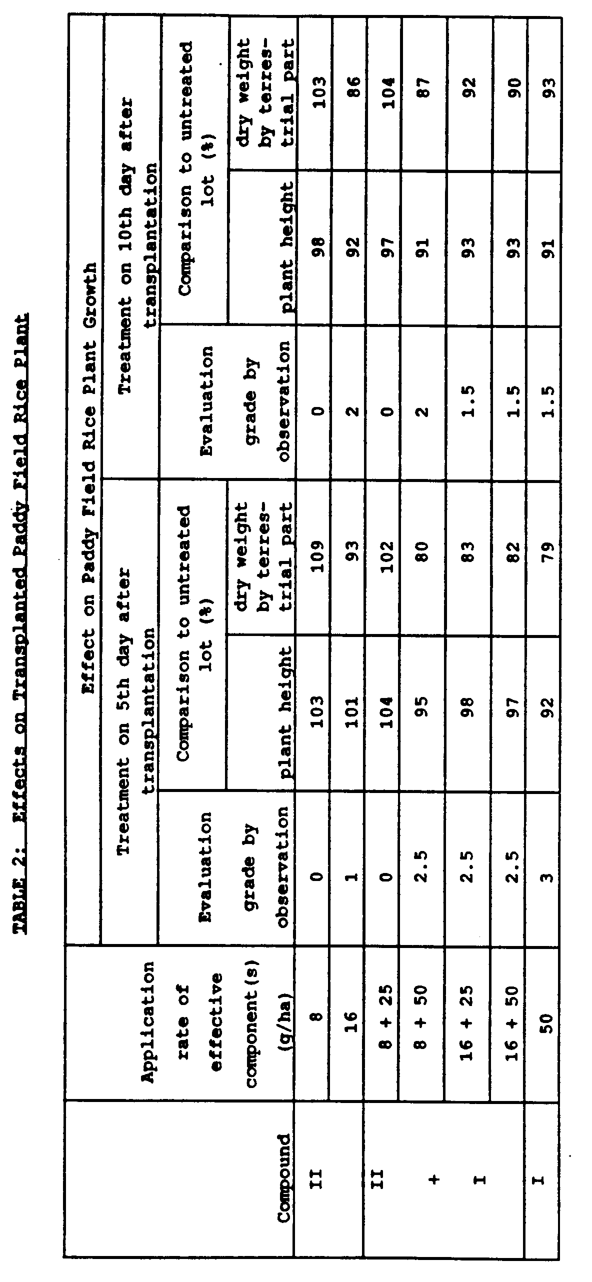

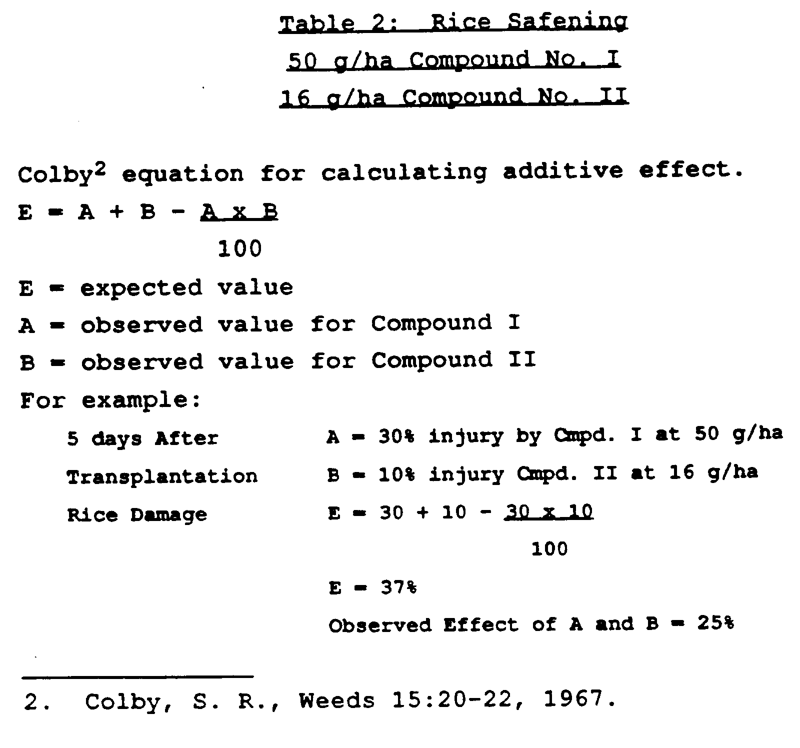

### TEST EXAMPLE 3

### Herbicidal Effect on Perennial Weeds at Different Leaf Stages

In the pots which had been prepared in the same manner as above Test Example 1, bulrush was seeded, and tubers of Japanese ribbon wapatoo, water nutgrass and water chestnut which had been germination-promoted in advance were separately transplanted. At 2-, 3- and 4-leaf stages of bulrush, Japanese ribbon watapo and water nutgrass, and when the grass height of water chestnut reached 10, 20 and 30 cm, the depth of the flooding water was made 3 cm and the chemical(s) was (were) applied in the prescribed manner. In order to observe the residual effect which is particularly important for confirming the effectiveness on perennial weeds, the examination was conducted on 50-60 days after the chemical treatments. The method of examination and the evaluation standard are same as those employed in Test Example 1. The results are as shown in Table 3.

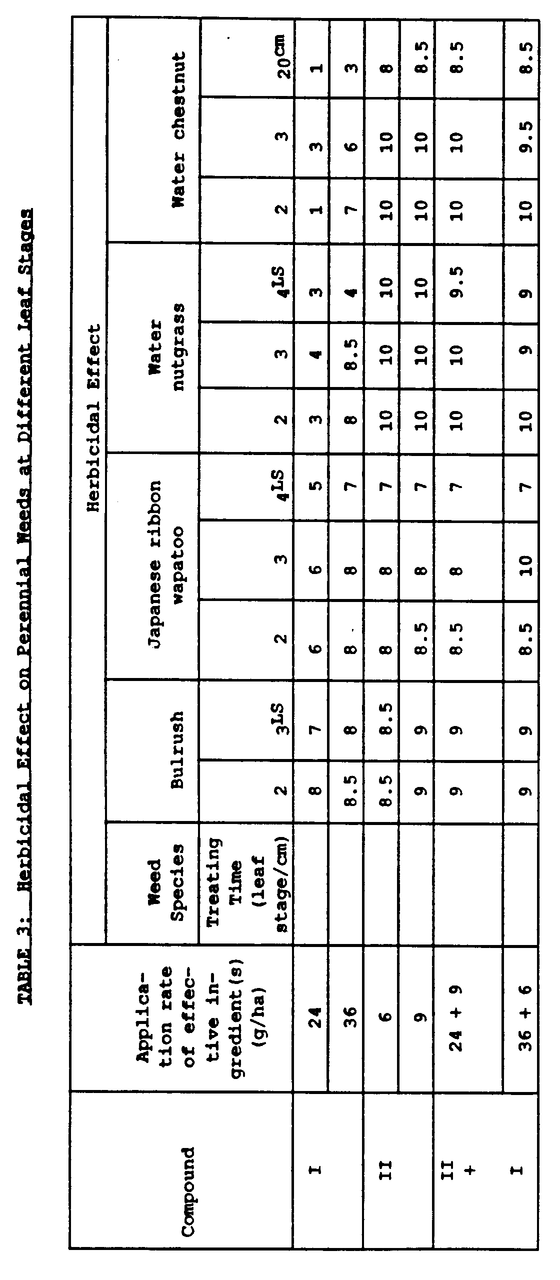

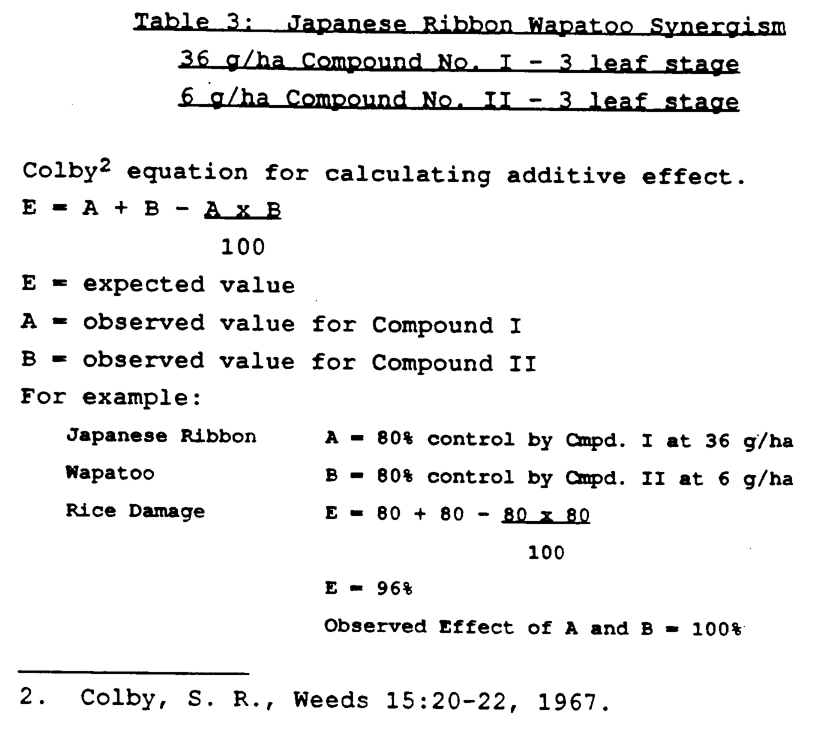

### TEST EXAMPLE 4

### Safety-Improving Effect by Simultaneous Application with Various Barnyard Grass-Controlling Agents

In the pots which had been prepared in the same manner as in Test Example 2, rice plant seedlings were transplanted to the depth of 2 cm (normal transplantation). On the 6th day after the transplantation, the depth of the flooding water was increased to 3 cm, and onto which the compounds of formula (I) and formula (II), and various barnyard grass-controlling agents [compounds of formulae (III)-(V)], each dissolved in acetone, were simultaneously applied dropwise with pippets. After three weeks had passed from the day of the treatment, the observation and examination were conducted in the same manner as in Test Example 2. The results are as shown in Table 4.

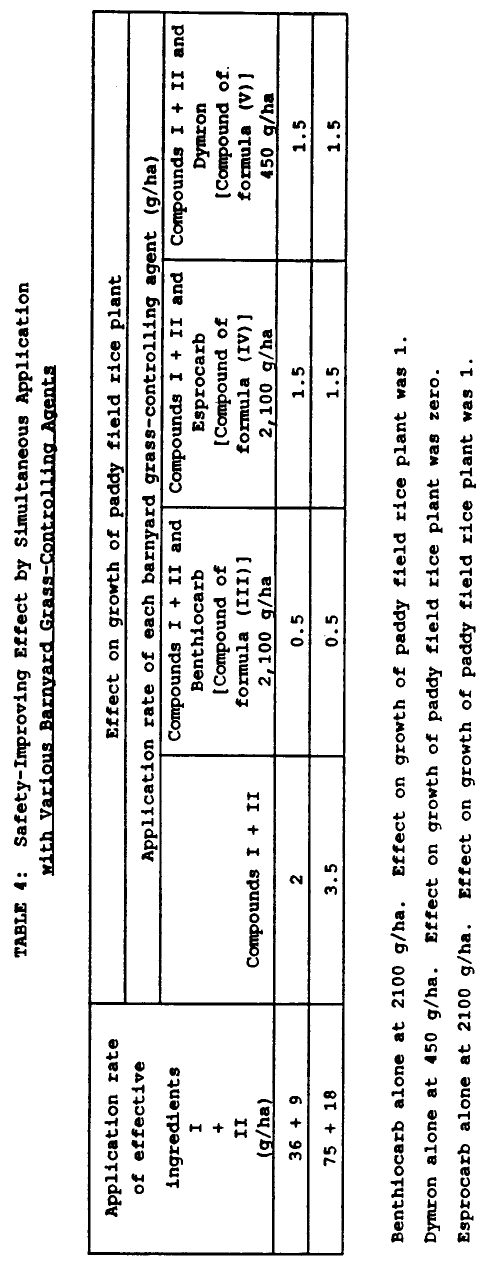

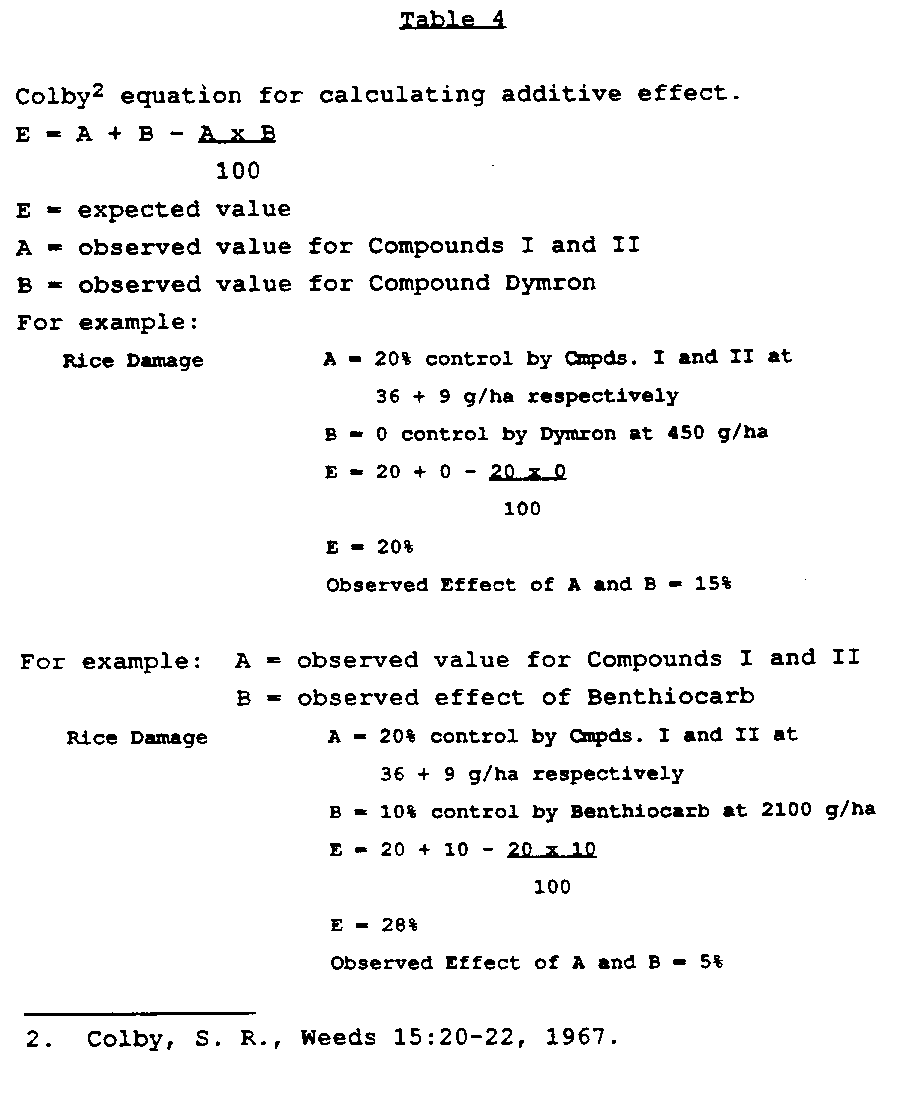

### TEST EXAMPLE 5

### Rice Plant Phytotoxicity Test in Experimental Paddy

### Field Station:

At an experimental paddy field station in Japan, a paddy field was tilled, flooded, fertilized and paddled, according to the customary practices. Thereafter, the paddy field rice plant (specie: Nihonbare, 2.1-2.2 leaf stage) and weed tubers were planted, and weed seeds were sown in the paddy field.

After the transplantation and seeding, the paddy field was maintained under 3-cm deep flooding water, and on the tenth day after the transplantation of rice seedlings, the compounds of formulae (II) and (VI) as dissolved in acetone were separately or simultaneously applied to the flooding water surface. The test was run in duplicate per lot.

On the tenth day after their application the phytotoxicity was evaluated by visual observation, following the grading system as employed in Test Example 2. The results are shown in Table 5.

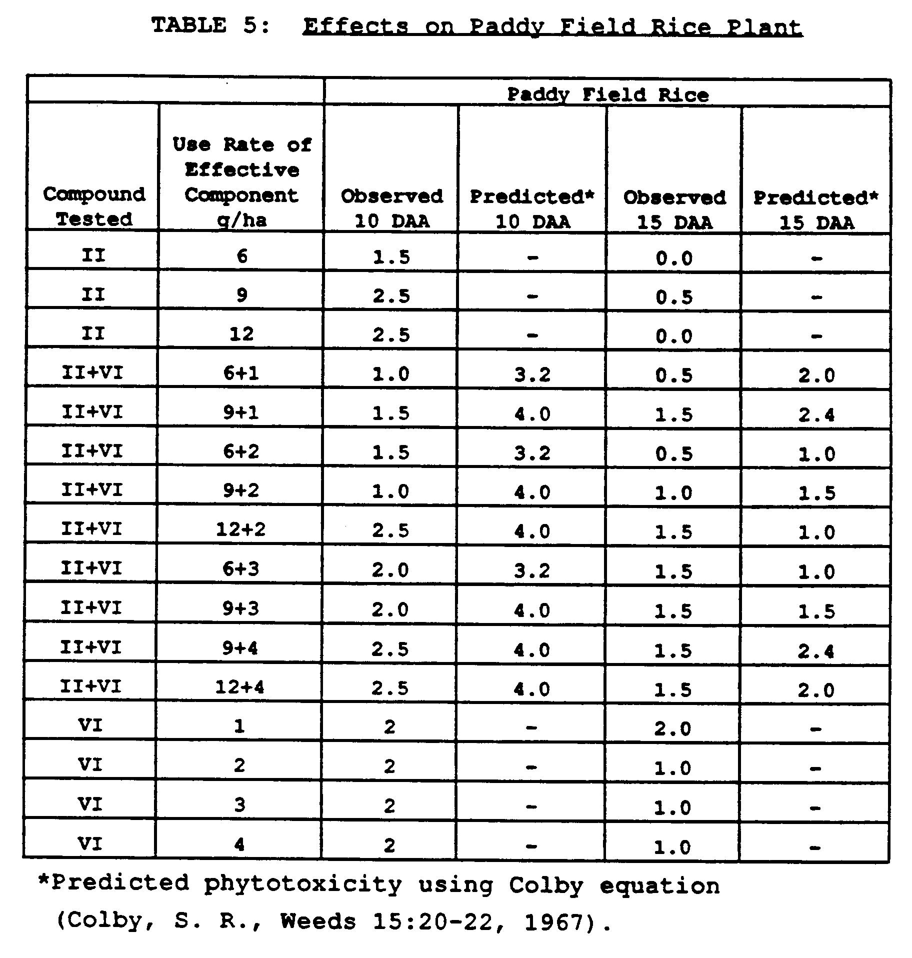

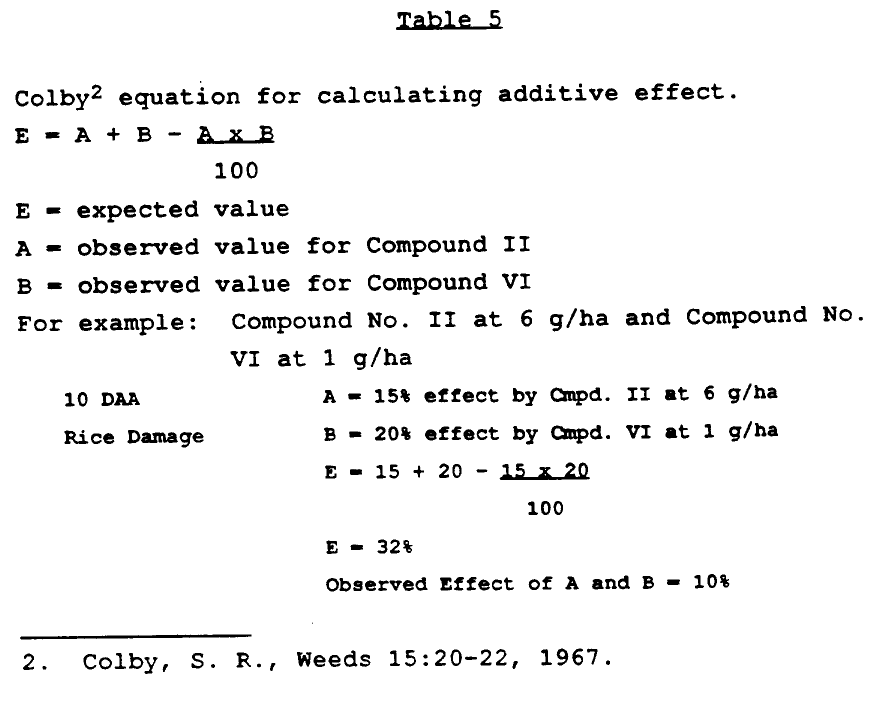

### TEST EXAMPLE 6

### Herbicidal Effect in Experimental Paddy Field Station

At an experimental paddy field station in Japan, a paddy field was tilled, flooded, fertilized and paddled, according to the customary practices. Thereafter, the paddy field rice plant (specie: Nihonbare, 2.1-2.2 leaf stage) and weed tubers were planted and weed seeds were sown in the paddy field.

After the transplantation and seeding, the paddy field was maintained under 3-cm deep flooding water, and at 2.5 leaf stage of the barnyard grass (10 days after the transplantation of rice plant seedling), the compounds of formulae (II) and (VI) as dissolved in acetone were separately or simultaneously applied to the flooding water surface. The test was run in duplicate per lot.

Thirty days after the application of those compounds, the herbicidal effect was evaluated by visual observation, following the below-specified grading system. The results are shown in Table 6.

| Herbicidal Effect Grading System | |
|---|---|
| | Amount of residual weeds compared to that in the untreated lot |
| 0: | 90-100% |
| 1: | 80-90% |
| 2: | 70-80% |
| 3: | 60-70% |
| 4: | 50-60% |
| 5: | 40-50% |
| 6: | 30-40% |
| 7: | 20-30% |
| 8: | 10-20% |
| 8.5: | 5-10% |
| 9: | 2.5-5% |
| 9.5: | 2-2.5% |
| 10: | 0% |

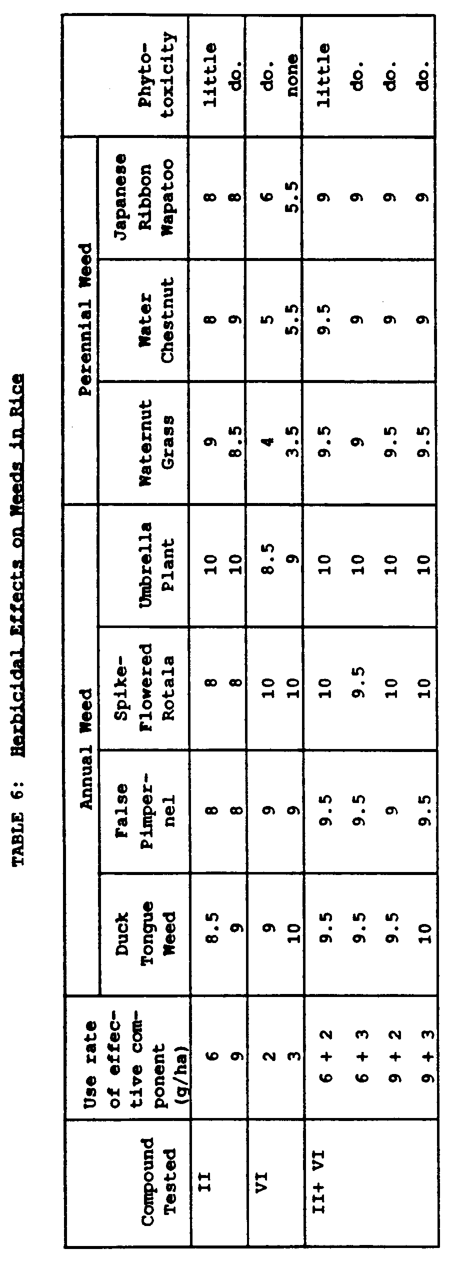

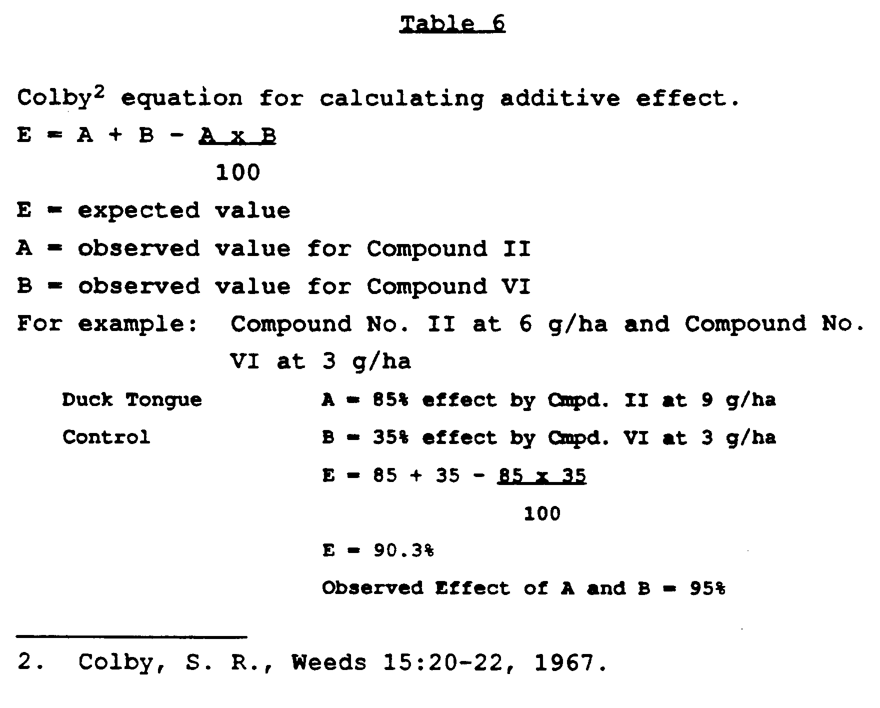

As is apparent from the results shown in Table 6 above, single use of the compound of formula (VI) achieved high herbicidal effect on annual weeds, but its activity was insufficient on perennial weeds. On the other hand, single use of the compound of formula (II) showed rather unsatisfactory herbicidal effect to false pimpernel, spike-flowered rotala and Japanese ribbon wapatoo (Sagittaria pygmaea miq.). In contrast to those, when the compounds of formulae (II) and (VI) were concurrently and simultaneously used, stable effect on all of the weed species was obtained at a low use rate, and accompanying phytotoxicity was negligible. When the two compounds were concurrently used, both maintained their respective herbicidal activity, and the phytotoxicity was within an allowable range.

### TEST EXAMPLE 7

### Safety-Improving Effect by Simultaneous Application with Various Barnyard Grass-Controlling Agents

In the pots which had been prepared in the same manner as in Test Example 2, rice plant seedlings were transplanted to the depth of 2 cm (normal transplantation). On the 5th day after the transplantation, the depth of the flooding water was increased to 3 cm, and onto which the compounds of formula (II) and formula (VI), and various barnyard grass-controlling agents [compounds of formulae (III), (IV), (V), and (VII)], each dissolved in acetone, were simultaneously applied dropwise with pippets. After three weeks had passed from the day of the treatment, the observation and examination were conducted in the same manner as in Test Example 2. The results are as shown in Table 7.

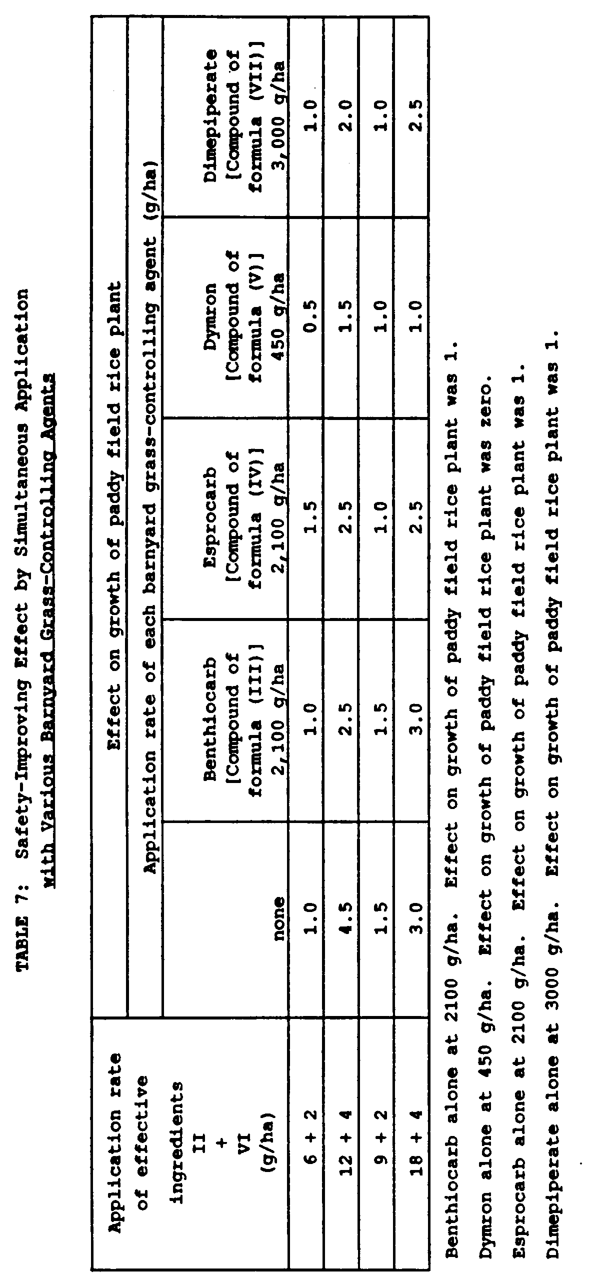

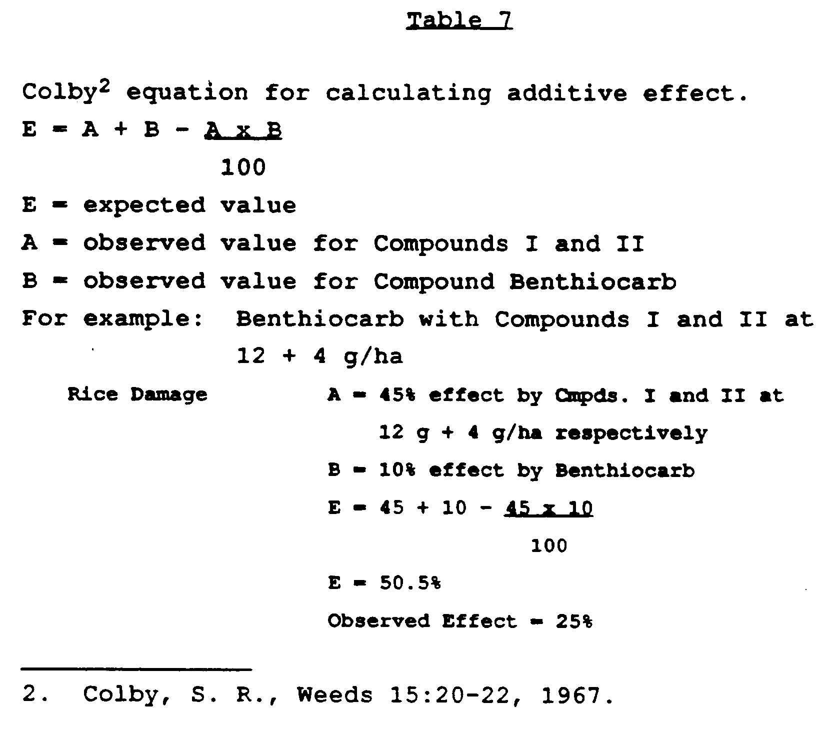

## Claims (Claims for the following Contracting State(s): FR, GR, IT)

1. A herbicidal composition which comprises as the effective ingredients, a combination of
(a) a compound expressed by formulae (I) or (VI) below: 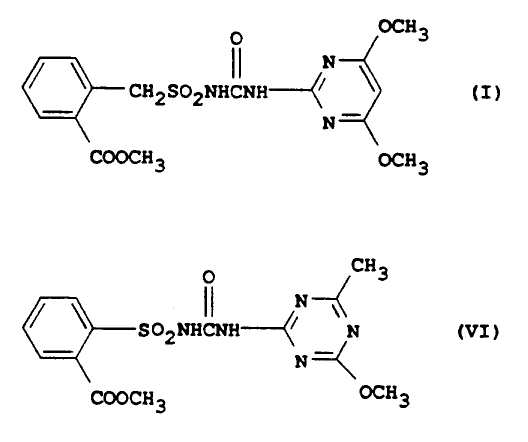
(b) a compound expressed by formula (II) below: 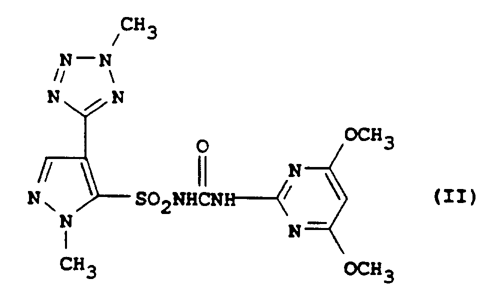
(c) optionally one or more of the compound selected from formulae (III), (IV), and (V); 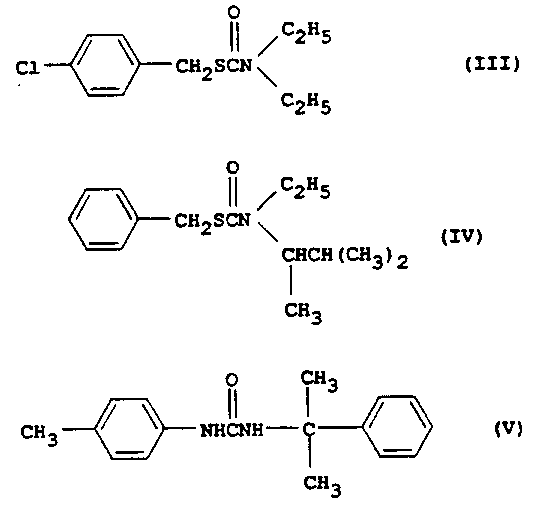 and one or more of the following: a surfactant, solid or liquid diluent.

2. The herbicidal composition of Claim 1 which comprises as the active ingredients a combination of compounds I and II.

3. A herbicidal composition of Claim 2, which comprises at least one compound selected from the compounds of the formulae (III), (IV) and (V) below:

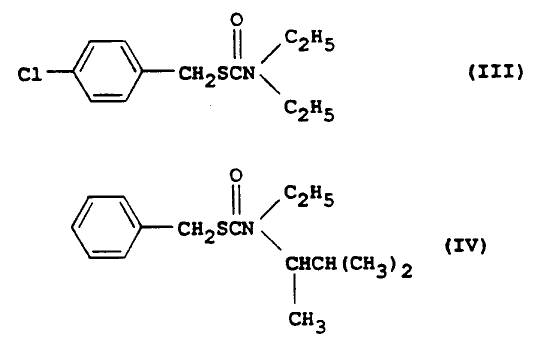

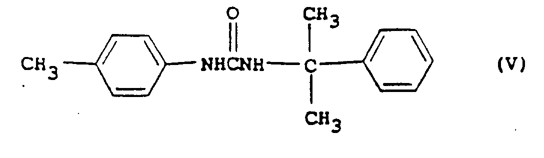

4. The composition of Claim 3 wherein the composition comprises formulae (I), (II), and (III).

5. The composition of Claim 3 wherein the composition comprises formulae (I), (II), and (IV).

6. The composition of Claim 3 wherein the composition comprises formulae (I), (II), and (V).

7. The composition of Claim 1 wherein the composition comprises formulae (VI) and (II).

8. The composition of Claim 1 wherein the composition comprises formulae (I) or (VI) with (II) and (III).

9. The composition of Claim 1 wherein the composition comprises formulae (VI) and (II) and additionally a compound of formula (VII)

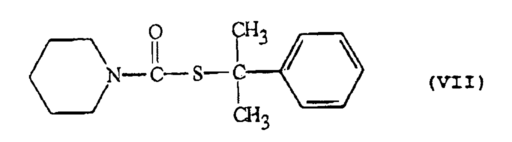

10. A method for controlling the growth of undesired weeds in a rice crop by applying an effective amount of the compositions of any one of Claims 1-9.

## Claims (Claims for the following Contracting State(s): ES)

1. A herbicidal composition which comprises as the effective ingredients, a combination of
(a) a compound expressed by formulae (I) or (VI) below: 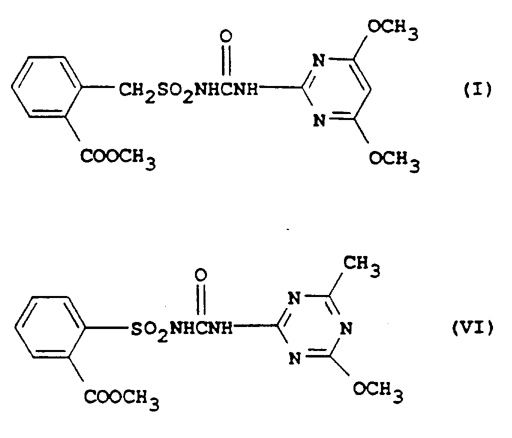
(b) a compound expressed by formula (II) below: 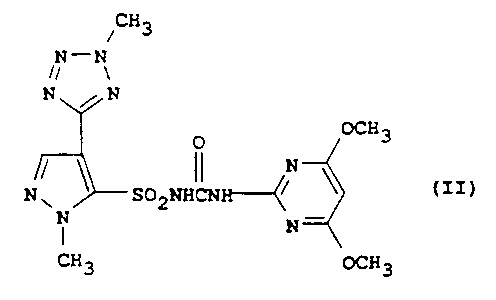
(c) optionally one or more of the compound selected from formulae (III), (IV), and (V); 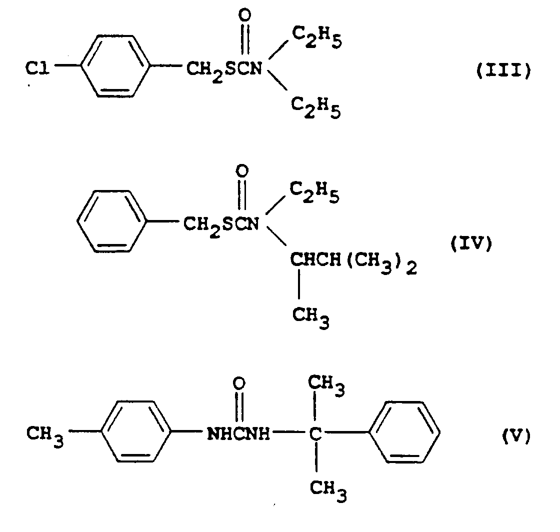 and one or more of the following: a surfactant, solid or liquid diluent.

2. The herbicidal composition of Claim 1 which comprises as the active ingredients a combination of compounds I and II.

3. A herbicidal composition of Claim 2, which comprises at least one compound selected from the compounds of the formulae (III), (IV) and (V) below:

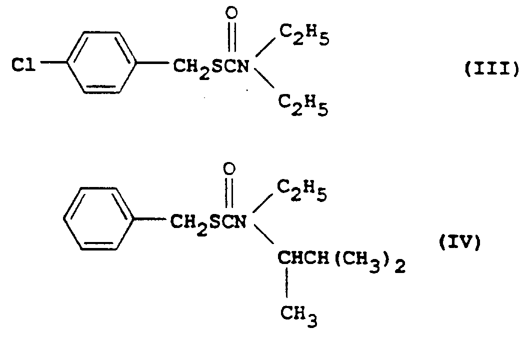

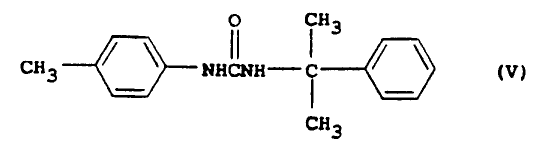

4. The composition of Claim 3 wherein the composition comprises formulae (I), (II), and (III).

5. The composition of Claim 3 wherein the composition comprises formulae (I), (II), and (IV).

6. The composition of Claim 3 wherein the composition comprises formulae (I), (II), and (V).

7. The composition of Claim 1 wherein the composition comprises formulae (VI) and (II).

8. The composition of Claim 1 wherein the composition comprises formulae (I) or (VI) with (II) and (III).

9. The composition of Claim 1 wherein the composition comprises formulae (VI) and (II) and additionally a compound of formula (VII)

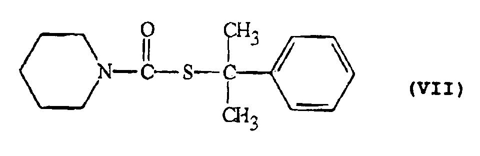

10. A method for controlling the growth of undesired weeds in a rice crop by applying an effective amount of the compositions of any one of Claims 1-9.

11. A method for the production of a herbicidal composition as defined in claim 1 which comprises forming an admixture of
(a) a compound expressed by formulae (I) or (VI) below: 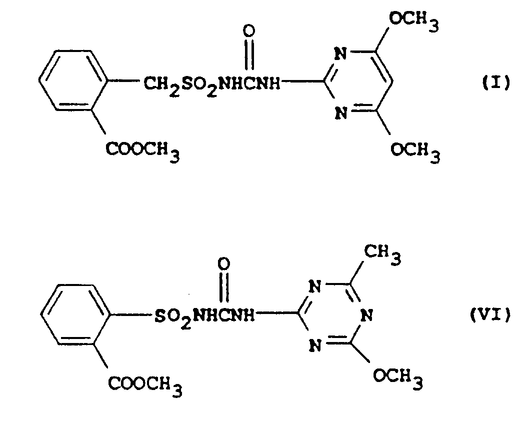
(b) a compound expressed by formula (II) below: 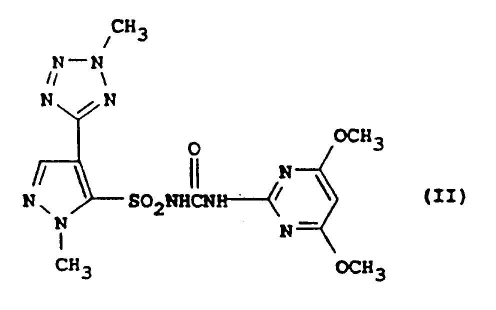
(c) optionally one or more of the compound selected from formulae (III), (IV), and (V); 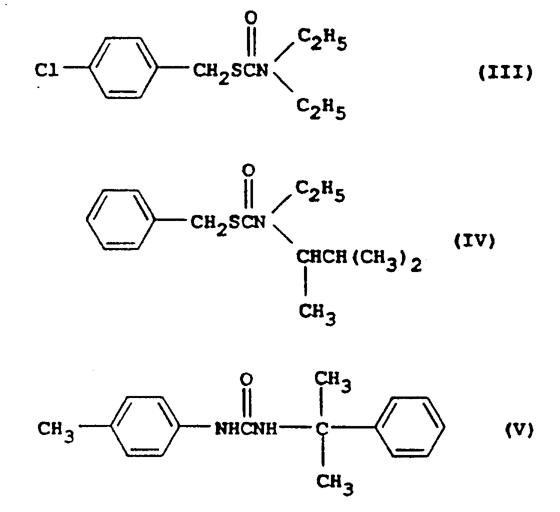 and one or more of the following: a surfactant, solid or liquid diluent.

12. The method of claim 11 wherein the active ingredients are as defined in any of claims 2-9.

## Patentansprüche (Patentansprüche für folgende(n) Vertragsstaat(en): FR, GR, IT)

1. Eine herbizide Zusammensetzung, die als die Wirkstoffe eine Kombination enthält aus
(a) einer Verbindung, dargestellt durch nachstehende Formeln (I) oder (VI): 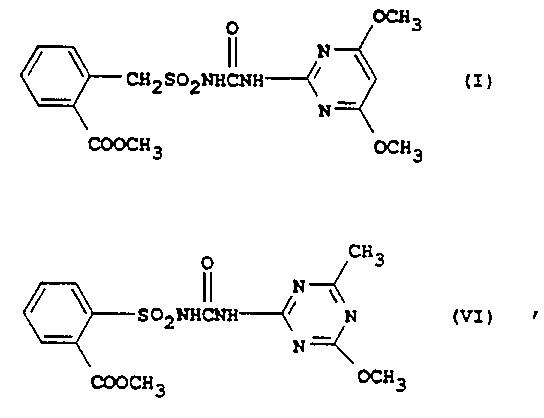
(b) einer Verbindung, dargestellt durch nachstehende Formel (II): 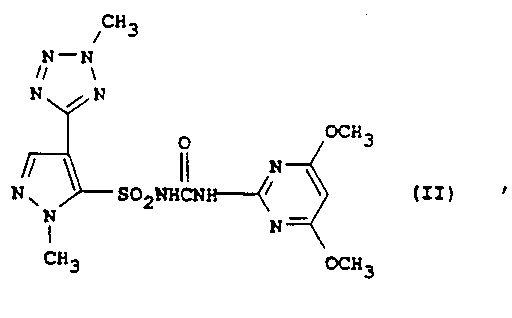
(c) gegebenenfalls einer oder mehreren der Verbindungen, ausgewählt aus den Formeln (III), (IV) und (V): 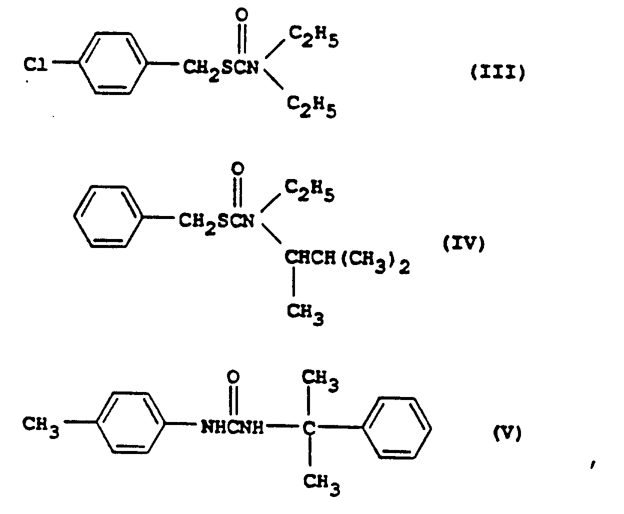 und einem oder mehreren der folgenden Stoffe: oberflächenaktiver Stoff, festes oder flüssiges Verdünnungsmittel.

2. Die herbizide Zusammensetzung nach Anspruch 1, die als die Wirkstoffe eine Kombination aus Verbindungen I und II enthält.

3. Eine herbizide Zusammensetzung nach Anspruch 2, die wenigstens eine Verbindung, ausgewählt aus den Verbindungen der nachstehenden Formeln (III), (IV) und (V): 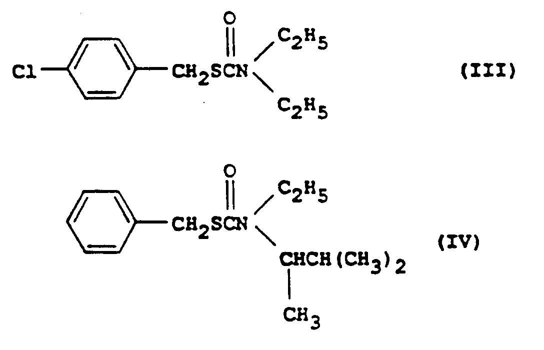 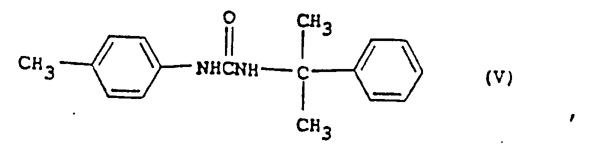 enthält.

4. Die Zusammensetzung nach Anspruch 3, worin die Zusammensetzung die Formeln (I), (II) und (III) enthält.

5. Die Zusammensetzung nach Anspruch 3, worin die Zusammensetzung die Formeln (I), (II) und (IV) enthält.

6. Die Zusammensetzung nach Anspruch 3, worin die Zusammensetzung die Formeln (I), (II) und (V) enthält.

7. Die Zusammensetzung nach Anspruch 1, worin die Zusammensetzung die Formeln (VI) und (II) enthält.

8. Die Zusammensetzung nach Anspruch 1, worin die Zusammensetzung die Formeln (I) oder (VI) mit (II) und (III) enthält.

9. Die Zusammensetzung nach Anspruch 1, worin die Zusammensetzung die Formeln (VI) und (II) und zusätzlich eine Verbindung der Formel (VII) 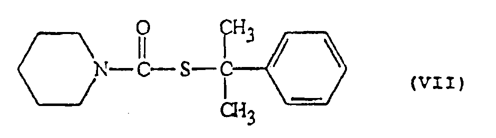 enthält.

10. Ein Verfahren zur Bekämpfung des Wachstums unerwünschter Schadpflanzen in einer Reiskultur durch Ausbringen einer wirksamen Menge der Zusammensetzungen nach irgendeinem der Ansprüche 1-9.

## Patentansprüche (Patentansprüche für folgende(n) Vertragsstaat(en): ES)

1. Eine herbizide Zusammensetzung, die als die Wirkstoffe eine Kombination enthält aus
(a) einer Verbindung, dargestellt durch nachstehende Formeln (I) oder (VI): 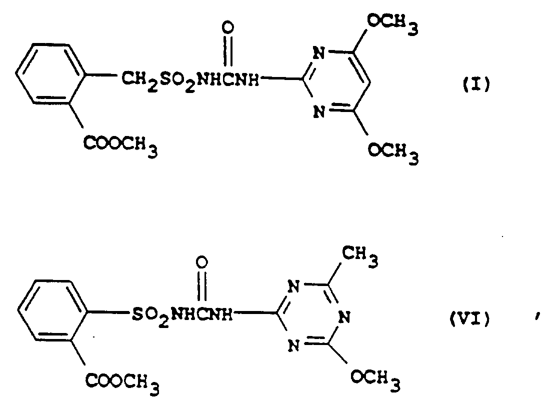
(b) einer Verbindung, dargestellt durch nachstehende Formel (II): 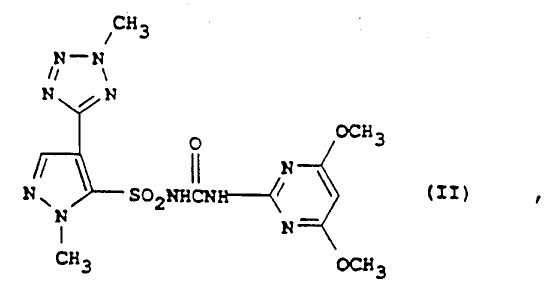
(c) gegebenenfalls einer oder mehreren der Verbindungen, ausgewählt aus den Formeln (III), (IV) und (V): 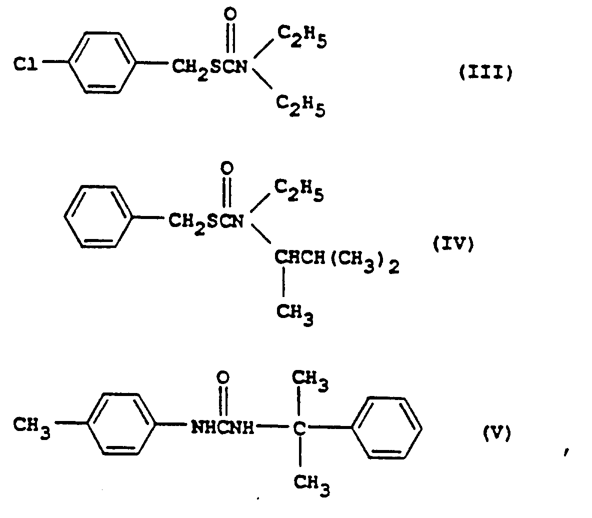 und einem oder mehreren der folgenden Stoffe: oberflächenaktiver Stoff, festes oder flüssiges Verdünnungsmittel.

2. Die herbizide Zusammensetzung nach Anspruch 1, die als die Wirkstoffe eine Kombination aus Verbindungen I und II enthält.

3. Eine herbizide Zusammensetzung nach Anspruch 2, die wenigstens eine Verbindung, ausgewählt aus den Verbindungen der nachstehenden Formeln (III), (IV) und (V): 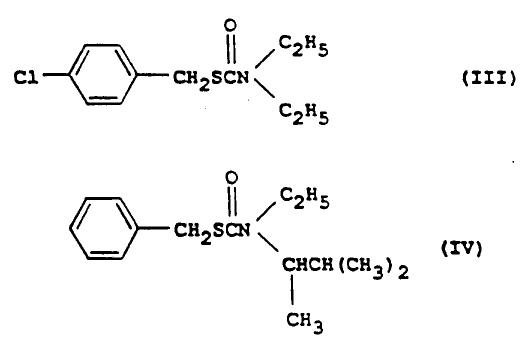 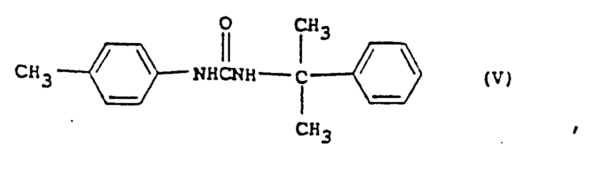 enthält.

4. Die Zusammensetzung nach Anspruch 3, worin die Zusammensetzung die Formeln (I), (II) und (III) enthält.

5. Die Zusammensetzung nach Anspruch 3, worin die Zusammensetzung die Formeln (I), (II) und (IV) enthält.

6. Die Zusammensetzung nach Anspruch 3, worin die Zusammensetzung die Formeln (I), (II) und (V) enthält.

7. Die Zusammensetzung nach Anspruch 1, worin die Zusammensetzung die Formeln (VI) und (II) enthält.

8. Die Zusammensetzung nach Anspruch 1, worin die Zusammensetzung die Formeln (I) oder (VI) mit (II) und (III) enthält.

9. Die Zusammensetzung nach Anspruch 1, worin die Zusammensetzung die Formeln (VI) und (II) und zusätzlich eine Verbindung der Formel (VII) 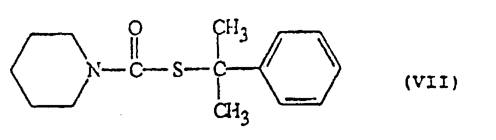 enthält.

10. Ein Verfahren zur Bekämpfung des Wachstums unerwünschter Schadpflanzen in einer Reiskultur durch Ausbringen einer wirksamen Menge der Zusammensetzungen nach irgendeinem der Ansprüche 1-9.

11. Ein Verfahren zur Herstellung einer wie in Anspruch 1 definierten herbiziden Zusammensetzung, das das Bilden einer Mischung von
(a) einer Verbindung, dargestellt durch nachstehende Formeln (I) oder (VI): 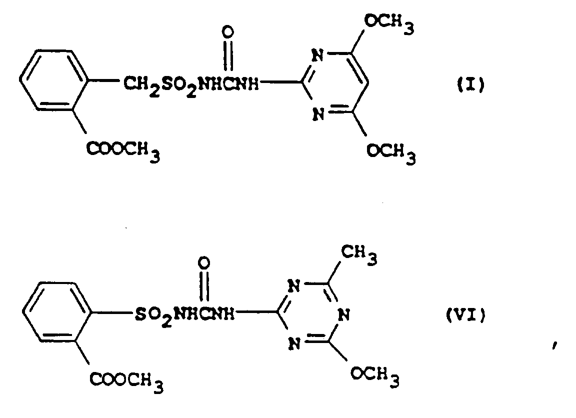
(b) einer Verbindung, dargestellt durch nachstehende Formel (II): 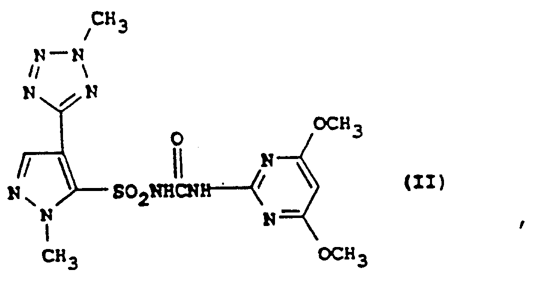
(c) gegebenenfalls einer oder mehreren der Verbindungen, ausgewählt aus den Formeln (III), (IV) und (V): 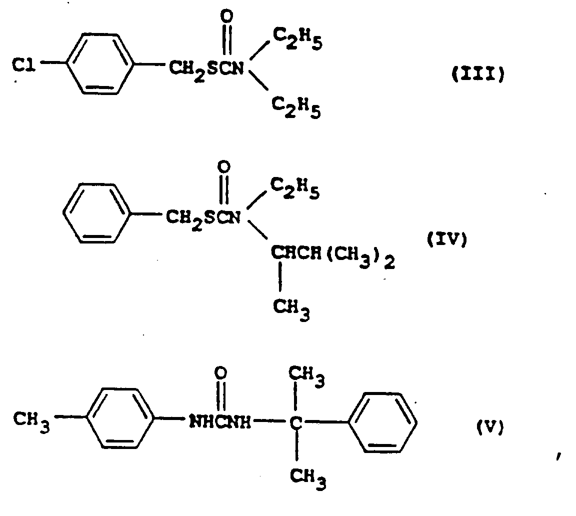 und einem oder mehreren der folgenden Stoffe:
oberflächenaktiver Stoff, festes oder flüssiges Verdünnungsmittel umfaßt.

12. Das Verfahren nach Anspruch 11, worin die Wirkstoffe wie in irgendeinem der Ansprüche 2-9 definiert sind.

## Revendications (Revendications pour l'(les) Etat(s) contractant(s) suivant(s): FR, GR, IT)

1. Une composition herbicide qui comprend, comme ingrédients actifs, une association de
(a) un composé représenté par la formule (I) ou (VI) ci-dessous : 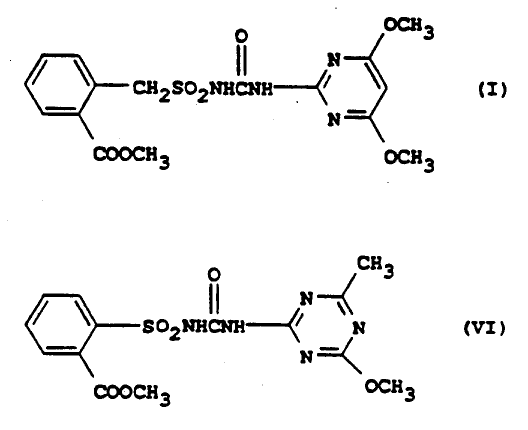
(b) un composé représenté par la formule (II) ci-dessous : 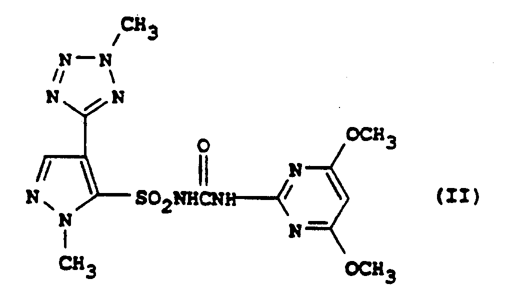
(c) facultativement un ou plusieurs composés choisis parmi ceux des formules (III), (IV) et (V) ; 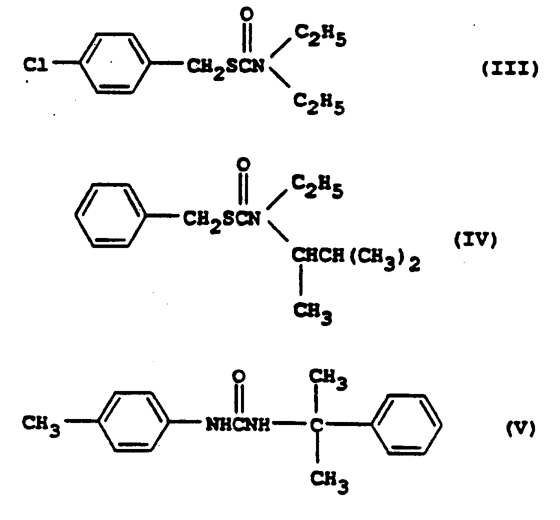 et un ou plusieurs des ingrédients suivants : agent tensio-actif, diluant solide ou liquide.

2. La composition herbicide de la revendication 1, qui comprend, comme ingrédients actifs, une association des composés I et II.

3. Une composition herbicide de la revendication 2, qui comprend au moins un composé choisi parmi les composés des formules (III), (IV) et (V) ci-dessous :

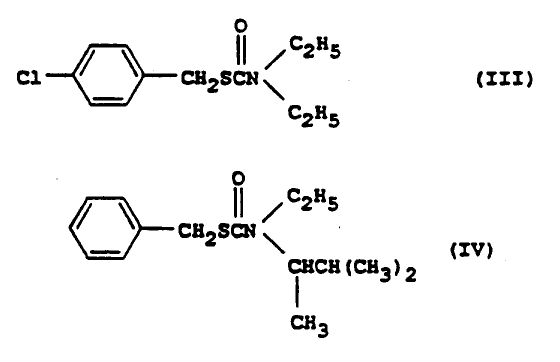

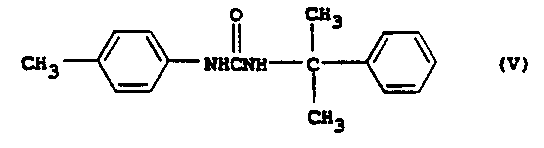

4. La composition de la revendication 3, dans laquelle la composition comprend les formules (I), (II) et (III).

5. La composition de la revendication 3, dans laquelle la composition comprend les formules (I), (II) et (IV).

6. La composition de la revendication 3, dans laquelle la composition comprend les formules (I), (II) et (V).

7. La composition de la revendication 1, dans laquelle la composition comprend les formules (VI) et (II).

8. La composition de la revendication 1, dans laquelle la composition comprend les formules (I) ou (VI) avec (II) et (III).

9. La composition de la revendication 1, dans laquelle la composition comprend les formules (VI) et (II) et, de plus, un composé de formule (VII)

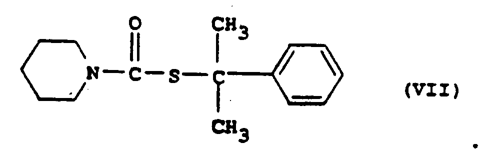

10. Un procédé pour combattre la croissance de mauvaises herbes indésirables dans une culture de riz par application d'une quantité efficace des compositions de l'une quelconque des revendications 1 à 9.

## Revendications (Revendications pour l'(les) Etat(s) contractant(s) suivant(s): ES)

1. Une composition herbicide qui comprend, comme ingrédients actifs, une association de
(a) un composé représenté par la formule (I) ou (VI) ci-dessous : 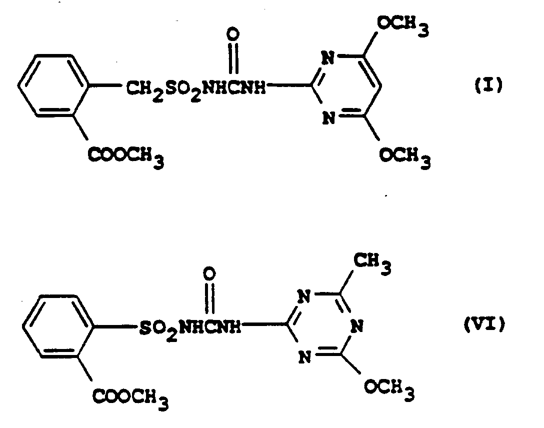
(b) un composé représenté par la formule (II) ci-dessous : 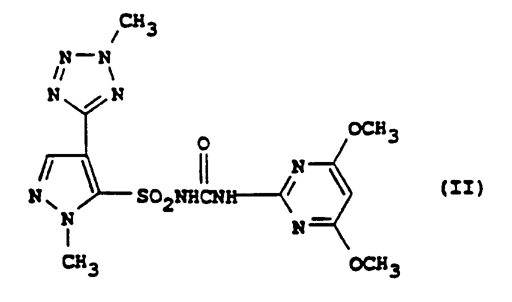
(c) facultativement un ou plusieurs composés choisis parmi ceux des formules (III), (IV) et (V) ; 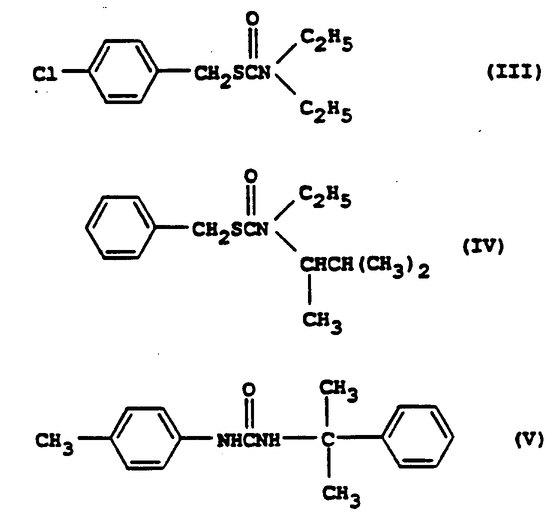 et un ou plusieurs des ingrédients suivants : agent tensioactif, diluant solide ou liquide.

2. La composition herbicide de la revendication 1, qui comprend, comme ingrédients actifs, une association des composés I et II.

3. Une composition herbicide de la revendication 2, qui comprend au moins un composé choisi parmi les composés des formules (III), (IV) et (V) ci-dessous :

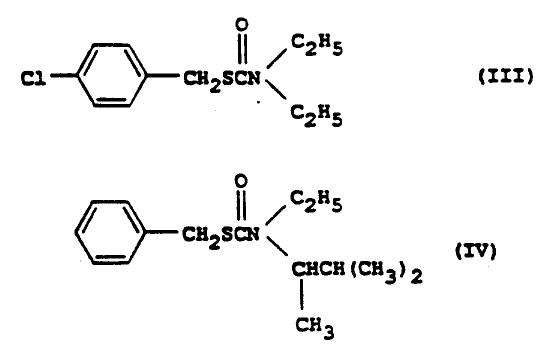

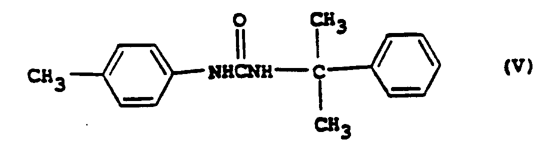

4. La composition de la revendication 3, dans laquelle la composition comprend les formules (I), (II) et (III).

5. La composition de la revendication 3, dans laquelle la composition comprend les formules (I), (II) et (IV).

6. La composition de la revendication 3, dans laquelle la composition comprend les formules (I), (II) et (V).

7. La composition de la revendication 1, dans laquelle la composition comprend les formules (VI) et (II).

8. La composition de la revendication 1, dans laquelle la composition comprend les formules (I) ou (VI) avec (II) et (III).

9. La composition de la revendication 1, dans laquelle la composition comprend les formules (VI) et (II) et, de plus, un composé de formule (VII)

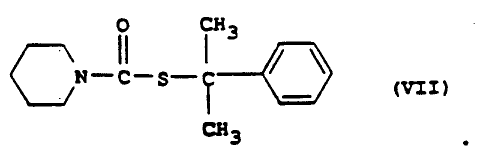

10. Un procédé pour combattre la croissance de mauvaises herbes indésirables dans une culture de riz par application d'une quantité efficace des compositions de l'une quelconque des revendications 1 à 9.

11. Un procédé pour la production d'une composition herbicide telle que définie dans la revendication 1, qui consiste à former un mélange de
(a) un composé représenté par la formule (I) ou (VI) ci-dessous : 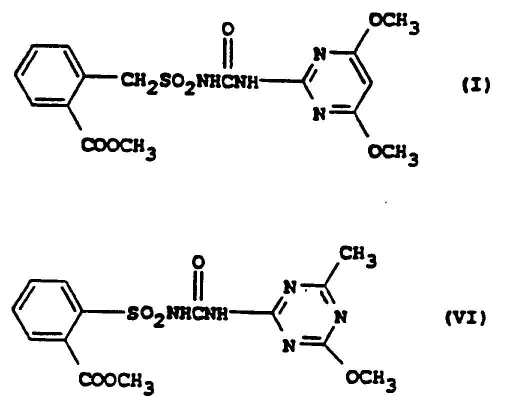
(b) un composé représenté par la formule (II) ci-dessous : 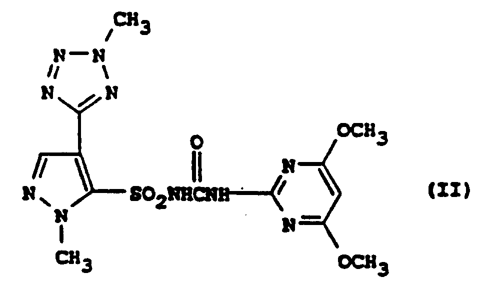
(c) facultativement un ou plusieurs composés choisis parmi ceux des formules (III), (IV) et (V) ; 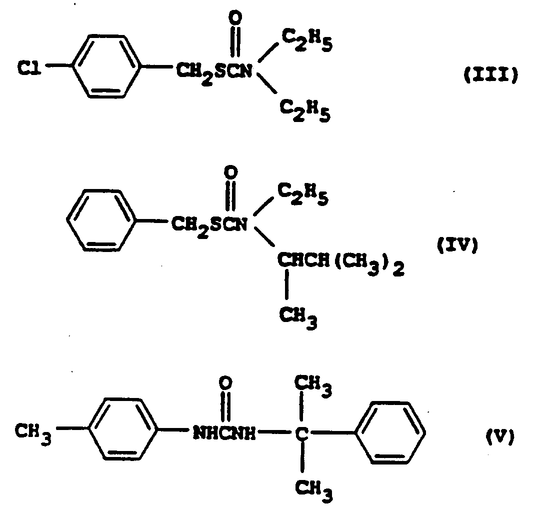 et d'un ou plusieurs des ingrédients suivants : agent tensio-actif, diluant solide ou liquide.

12. Le procédé de la revendication 11, dans lequel les ingrédients actifs sont tels que définis dans l'une quelconque des revendications 2 à 9.
